# EUROPEAN PATENT SPECIFICATION

(11) **EP 4 207 436 B1**
(45) Date of publication and mention of the grant of the patent: **20.11.2024**
(21) Application number: 22215954.3
(22) Date of filing: 22.12.2022
(51) Int. Cl.: H01M 10/613, H01M 10/615, H01M 10/625, H01M 10/643, H01M 10/6557, H01M 50/213, H01M 50/249, H01M 50/258, H01M 50/262, H01M 50/271, H01M 50/291, H01M 50/503, H01M 50/507

(54) **BATTERY MODULE AND BATTERY PACK**
BATTERIEMODUL UND BATTERIEPACK
MODULE DE BATTERIE ET BLOC-BATTERIE

(30) Priority: 30.12.2021 FI 20216365
(43) Date of publication of application: 05.07.2023
(73) Proprietor: Avant Tecno Oy, 33470 Ylöjärvi (FI)
(72) Inventor: Piepponen, Mikko, 33470 Ylöjärvi (FI)
(74) Representative: Kolster Oy Ab

(56) References cited:
- CN-A- 113 169 403
- KR-A- 20210 157 397
- US-A1- 2020 388 803

## Description

### Field

The invention relates to a field of batteries, especially to modular battery modules for forming battery packs.

### Background

Different kind of battery packs are widely used in electric vehicles, for example. There is a plurality of modular battery modules available in the market that can be used to form a desired battery pack. A structure of the battery modules may be complicated that may cause drawbacks in a manufacturing, for example. In addition, an efficient heat transfer in the battery modules of the battery pack may be challenging. The known solutions have many drawbacks especially in the above mentioned areas.

Hence, there is a need for a more sophisticated battery module that can be used to form the battery packs with a desired capacity and further alleviates the issues of the known solution.

US2020/0388803A1 discloses a battery pack includes a first core pack and a second core pack each holding a plurality of unit cells. The unit cells of a first cell group or second cell group that is closest to a connector are electrically connected to the connector through a third busbar. The unit cells of the first cell group or second cell group that is most distant from the connector are electrically connected to the connector through a fourth busbar.

KR1020210157397A discloses a battery module including a module terminal, an electrochemical cell, and a busbar electrically connecting at least a subset of the cell to the module terminal. The busbar includes an electrically conductive substrate and an insulating layer disposed between the substrate and an end of the cell. The substrate includes primary connection through holes, each primary connection through hole having a second diameter and aligned with a first end of a unique cell of the cell. The insulating layer includes a secondary connection through hole. Each secondary connection through-hole has a third diameter and is concentric with a corresponding one of the primary through-holes. The third diameter is smaller than the second diameter, and an electrical connector extends between the board and the cell terminal and provides an electrical connection between the board and the cell terminal.

CN113169403A discloses a battery tray comprising a plurality of battery receptacles and arranged into receptacle rows for holding a plurality of batteries and a conductor passageway which passes through a receptacle row is disclosed. The battery receptacle comprises a first portion which is a top portion having a top end, a second portion which is a base portion having a bottom end and a peripheral portion extending between the first portion and the second portion and surrounding the receptacle axis to define a battery compartment. The conductor passageway is formed on the peripheral portion and extends in a direction parallel to the row axis and offset therefrom.

### Brief description

The present invention is defined by the subject matter of the independent claims.

Embodiments are defined in the dependent claims.

The embodiments and features, if any, described in this specification that do not fall under the scope of the independent claim are to be interpreted as examples useful for understanding various embodiments of the invention.

### List of drawings

Example embodiments of the present invention are described below, by way of example only, with reference to the accompanying drawings, in which
Figures 1A, 1B and 3 illustrate a battery module according to embodiment of the invention;
Figures 2A, 2B and 2C illustrate a main frame of the battery module according to embodiment of the invention;
Figure 4 illustrates a busbar frame of the battery module according to embodiment of the invention; and
Figure 5 illustrates a battery pack according to embodiment of the invention.

### Description of embodiments

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned. All combinations of the embodiments are considered possible if their combination does not lead to structural or logical contradiction.

A plurality of battery cells may be used to form a battery module, and a plurality of the battery modules may be used to form a battery pack with a desired capacity. A structure of battery modules having a plurality of battery cells is often complex. The complexity may cause challenges in a manufacturing of the battery modules. In addition, the cells need an efficient heat transfer system that may cause more issues to the structure. The solution according to the invention provides the battery module and the battery pack having a simple structure with the efficient heat transfer.

According to an aspect, there is provided a battery module comprising a plurality of battery cells having two opposite ends, a first busbar assembly comprising at least a first busbar coupled with a first busbar frame, and a second busbar assembly comprising at least a second busbar coupled with a second busbar frame configured to couple the battery cells electrically to form desired battery configuration, and a main frame having side walls forming a housing and a middle wall inside the housing dividing an inner space of the housing in a vertical direction to a first and a second sections, wherein the middle wall comprises a plurality of holes for receiving the battery cells such that one end of battery cell is in the first section and another end in the second section, and wherein the middle wall further comprises a plurality fastening members for fastening the first busbar assembly to the middle wall in the first section and the second busbar assembly to the middle wall in the second section such that the battery cells are arranged between the first and the second busbar assemblies which couple the battery cells to the battery module.

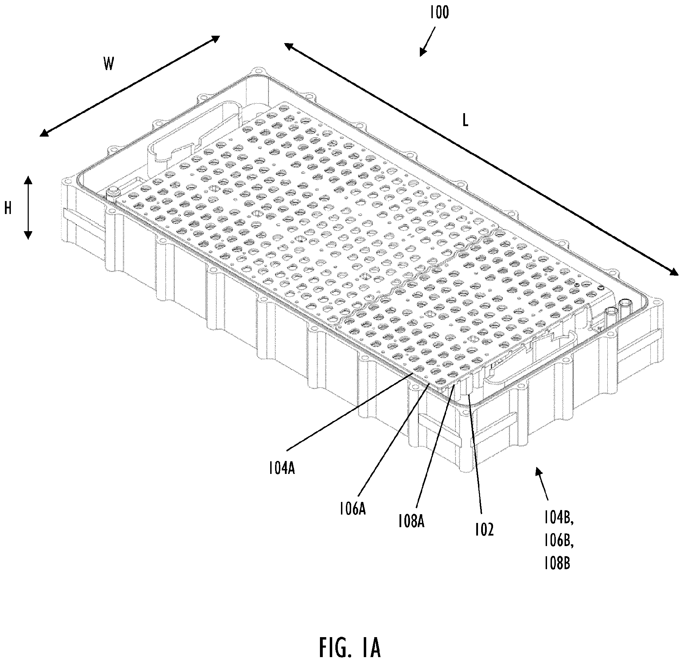

The term "vertical direction" refers to a height H of the module, the term "width direction" refers to a width W of the module and the term "longitudinal direction" refers to a length L of the module. These directions are illustrated by arrows in Figure 1A.

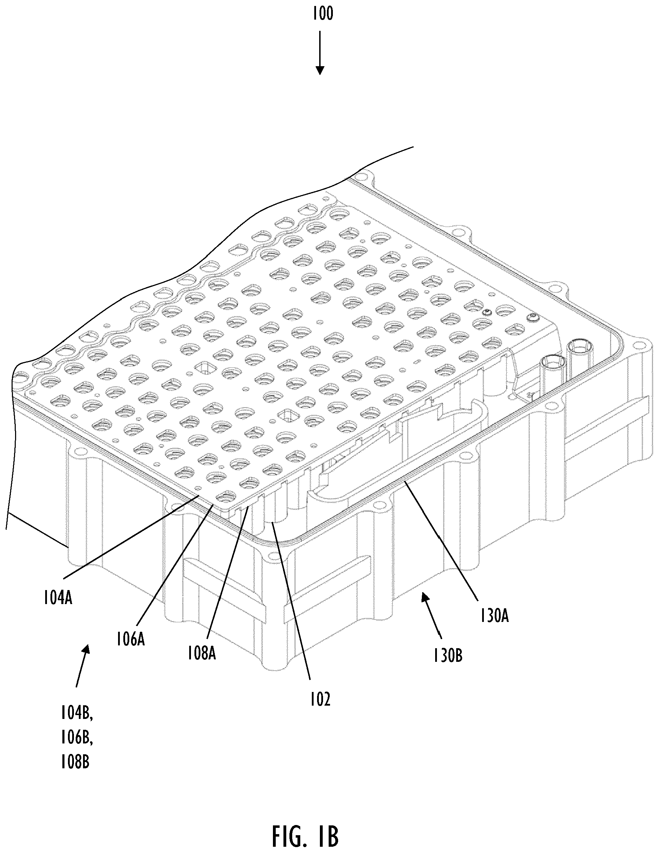

Referring to Figure 1A, which illustrates the whole battery module, and Figure 1B, which illustrates one end of the battery module in detail. In an embodiment, the battery module 100, comprises a plurality of the battery cells 102 having two opposite ends. A shape of the battery cell may be cylindrical, for example. Two opposite ends may refer to terminals of the battery. One end may comprise a positive terminal and another one a negative terminal, wherein the terminals are on the opposite ends of the cylindrical battery cell. The cells may be arranged into the module such that their longitudinal axis is substantially parallel to the vertical direction H of the module.

Still referring to Figures 1A and 1B, in an embodiment, the battery module 100 further comprises the first busbar assembly 104A comprising at least the first busbar 106A coupled with the first busbar frame 108A, and the second busbar assembly 104B comprising at least the second busbar 106B coupled with the second busbar frame 108B. The first and the second busbar assemblies 104A - B are configured to electrically couple the battery cells 102 together to form the desired battery configuration having the desired capacity. The busbars may be plate-like parts made of conductive material which, in an installed state, are in contact with the terminals of the battery cells. The first busbar assembly may be used to electrically couple the desired terminals of the battery cells together in the first end of the cells, and the second busbar may be used to electrically couple the desired terminals in the second end of the cells to form the desired battery capacity. The busbar frames may not be conductive and may be made of a plastic, for example.

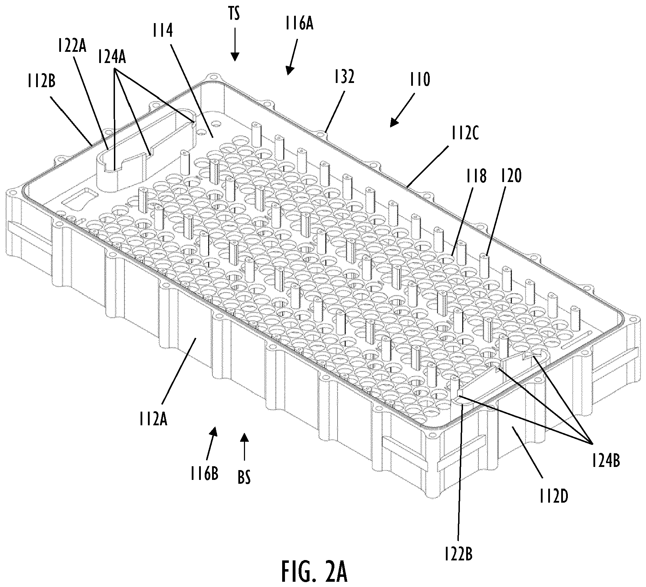

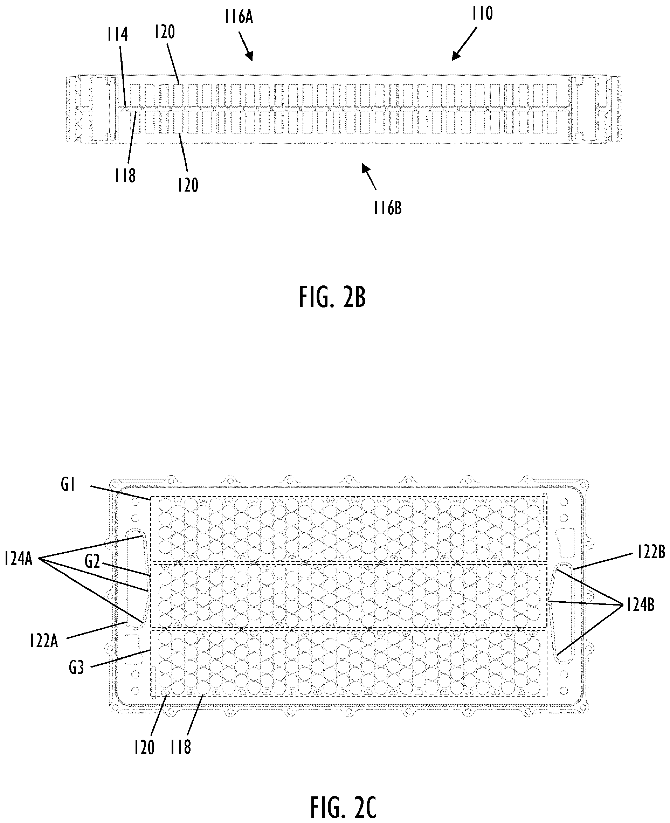

Referring now to Figures 2A and 2B, in an embodiment, the module further comprises the main frame 110 having the side walls 112A - D forming the housing. The side walls cover the main frame from sides such that the side walls form uniform entity around the frame. The frame (housing) may be open from a top side TS and from a bottom side BS.

In an embodiment, the main frame 110 further comprises the middle wall 114 inside the housing dividing an inner space of the housing in the vertical direction H to the first and the second sections 116A - B. The first section 116A may be an upper portion of the inner space which is above the middle wall 114, and the second section 116B may be a lower portion of the inner space which is below the middle wall as illustrated in Figure 2B. Figure 2B is a cross section of the frame in the longitudinal direction. The first and the second sections of the frame may be substantially similar having the same features. The middle wall 114 comprises a plurality of holes 118 for receiving the battery cells 102. The middle wall may be a thin plate-like structure which supports the cells, arranged into the holes, substantially from the middle of the cells in the vertical direction. In other words, the middle wall may be substantially in the middle of the cell in the vertical direction, then the distance between the middle wall and both end of the cell is substantially the same. The middle wall may be thin such that it covers the battery cells as less as possible when the cells are placed into the holes. In other words, it covers the battery cells from the middle such that a major part of the battery cells is not covered.

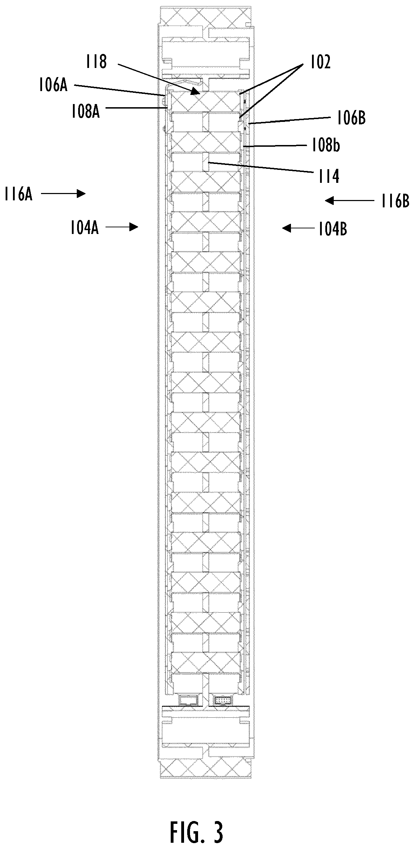

Referring now to Figure 3 which is a cross section of the battery module 100 in the longitudinal direction L. Features that have cross hatching are sectioned. For example, every other battery cell 102, which is visible in Figure 3, is sectioned and every other battery cell 102 is not. In an embodiment, the cells 102 may be arranged such that one end of battery cell is in the first section of the frame 116A and another end of the battery cell is in the second section 116B. As described above, the sections 116A, 116B are separated by the middle wall 114 having a plurality of holes 118 for the battery cells 102. It is good to understand that all the cells may not be arranged the same way. Different kind of serial and/or parallel wirings may be implemented with the battery cells to get the desired battery configuration and capacity. For example, two thirds of the cells may be arranged such that the end of the cell having the positive terminal is in the first section of the frame, and one third of the cells may be arranged such that the end of the cell having the positive terminal is in the second section of the frame. Then one third of the cells may be arranged the other way around than two thirds of the cells from the terminals point of view in the one frame section. This was just one example, and as described the cells may be arranged a plurality of ways to get the desired configuration. In addition, structures and/or amount of the busbars in the first and the second busbar assembly may vary according to the desired battery configuration. To form the different battery configuration with the different capacity from the battery cells is well known and can be seen as obvious to the skilled person and hence, it is not described with greater details in this application.

Referring now to Figures 2A, 2B and 3, in an embodiment, the middle wall further comprises, on both sides, a plurality fastening members 120 for fastening the first busbar assembly 104A to the main frame110 in the first section 116A, and the second busbar assembly 104B to the main frame 110 in the second section 116B such that the battery cells 102 are arranged between the first and the second busbar assemblies 104A - B, wherein the busbar assemblies 104A - B couple the battery cells 102 to the battery module 100. In other words, the cells are arranged between the first and the second busbar assembly, wherein the first busbar assembly is coupled with the middle wall in the first section of the frame, and respectively the second busbar assembly is coupled with the middle wall in the second section of the frame.

In an embodiment, the busbar assemblies may be coupled only with the middle wall via fastening members, not with the other parts of the frame like side walls, for example. Then all the fastening members may be placed in the middle wall. In another embodiment, a part of the fastening members of the middle wall may be in connection with the side walls. In other words, some of the fastening members may be in the middle wall and further in connection with the side walls.

Conventionally the battery modules comprise one or more separate support parts for holding the cells in the desired arrangement, and to couple the cells into the frame. This may make the known battery module structures complex. In the invention, the middle wall that acts as a support part, is integrated with the frame. Hence, the battery module assembly comprises only the main frame that forms the side walls around the battery cells, and further provides the middle wall having the holes for supporting and holding the battery cells in the module with the busbar assemblies. This is very beneficial especially from a manufacturing point of view since the main frame having the middle wall can be made of the one part by an injection moulding, for example. In addition, when the middle wall is integrated in the frame, the assembling of the battery module is simpler and easier since there is less parts in the assembly.

In an embodiment, the fastening members in the middle wall comprise a protrusion like a screw boss (screw tower). The protrusion may comprise a hole configured to receive a screw used for fastening the busbar assemblies in the middle wall (main frame).

Referring now to Figure 2A, the battery module 100 comprises a first conduit 122A in vicinity of a first end of the frame 110 for leading a heat transfer substance into the module, and a second conduit 122B in vicinity of a second end of the frame 110 for leading the heat transfer substance out of the battery module. The battery pack made of the battery modules may comprise a heat transferring system used for cooling and/or heating the battery cells. For example, the system may be used for transferring heat produced by the battery cells, in other words cooling the cells. It is also possible to use the system for transferring heat to the cells in cold conditions, for example. The heat transfer substance used for transferring heat. It may be liquid and/or gas, for example.

In an embodiment, the first conduit 122A comprises one or more inlets 124A for leading the heat transfer substance into the first and/or the second section of the frame 116A - B, and the second conduit 122B comprises one or more outlets 124B for leading the heat transfer substance out of the first and/or second section of the frame 116A - B.

In an embodiment, the battery cells in the module may be divided in three groups in the longitudinal direction, and hence the holes in the middle wall may have the same grouping. Referring now to Figure 2C, in an embodiment the holes 118 in the middle wall 114 are in the three groups G1 - G3. The fastening members 120, like the screw bosses, may be on the edge of each group and/or between them. In an embodiment, the screw bosses of the group G1 and/or the group G3 that are closest to the side wall may be integrated with the side wall.

In an embodiment, the first conduit 122A comprises three inlets 124A in the first and the second section configured to lead the heat transfer substance to each of the groups G1 - G3. In other words, the inlets are placed in the conduit such that there is the inlet for each group of the cells on both sections of the main frame. Respectively the second conduit 122A comprises three outlets 124B in the first and the second section for leading the heat transfer substance out of each group G1 - G3. Hence, the outlets are also placed in the conduit such that there is the outlet for each group of the cells on both sections of the frame. It is still good to understand that the heat transfer substance may also move between the groups.

In an embodiment, the holes (and the cells) may also be divided differently than presented above (three groups). There may be more or less than three groups, depending on the capacity of the module. Then also the amount of the inlets and outlets in the conduits may be adjusted to be accordant with the amount the of the groups in both sections of the frame.

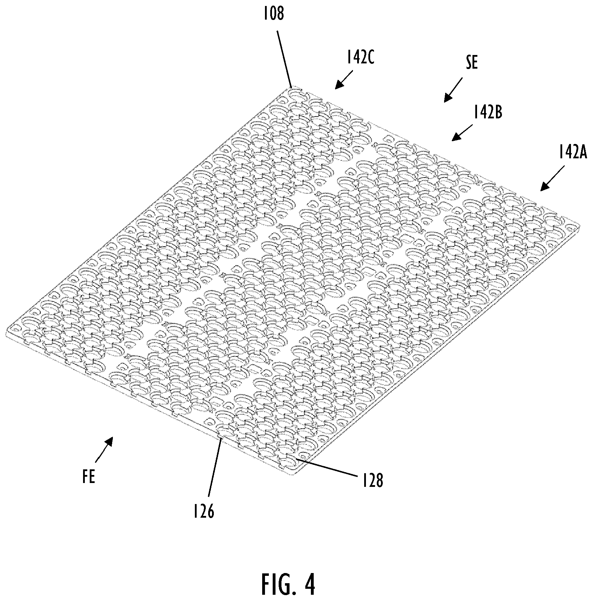

Referring now to Figure 4 which illustrates the busbar frame according to an embodiment. The first and/or the second busbar frame 108A - B comprises at least one groove 126 placed in the frame such that it is in vicinity of one or more the ends of the battery cells 102 when the busbar assembly 104A - B is installed into the module 100 having the battery cells 102. The groove is configured to enable access of the heat transfer substance to the ends of the battery cells. The busbar frame may a plate-like part having a large top and bottom surface. The bottom surface may refer to a surface which is against the end of battery cells in the installed state. The at least one groove may extend in the bottom surface though the busbar frame in a longitudinal direction from a first end FE and to a second end SE of the frame.

The busbar frame 108A - B may comprise cavities 128 configured to receive the end of the battery cells. The cavity may block, at least partly, the flow of the heat transfer substance to the end of the cell. Still, it is important from the cooling point of view that the heat transfer substance is in contact with the ends of the cells since the ends generate the most heat. The groove opens the structure of the busbar frame such that the heat transfer substance can be in connection with the end of the battery cell placed in the cavity. The groove(s) 126 may create a channel network 142 extending thought the busbar frame 108A - B such that the heat transfer substance can flow through the cavities 128 and be in contact with the ends of the cells 102. The channel network may connect all the cavities.

As described above, the holes (and the battery cells) may be divided into the three groups G1 - G3 in the middle wall 114, for example. The busbar frame 108A - B may comprise the above mentioned channel network 142A - C, created by the groove(s) 126, for each of these groups G1 - G3 as illustrated in Figure 4. The first channel network 142A may be for the first group G1, the second channel network 142B may be for the second group G2, and the third channel network 142C may be for the third group G3, for example. The different channel networks 142A - C may not be coupled together by the groove(s) 126. As described above, there may be less or more than three groups and the amount of the channel networks may be adjusted with the mount of the groups.

The channel network of each group may comprise a plurality of openings in the first end of the first and second busbar frame enabling progress of the heat transfer substance into the channel network (grooves) and a plurality of the opening in the second end enabling progress of the heat transfer substance out of the channel network. In Figure 4, there is illustrated four openings on both ends of the busbar frame per group.

In an embodiment, illustrated for example in Figures 1A and 3, the first busbar frame 108A is arranged between the first busbar 106A and the battery cells 102, and the second busbar frame 108B is arranged between the second busbar 106B and the battery cells 102. As discussed above, the one of the busbar assemblies, having the busbar and the busbar frame, is in the first section of the frame, and another one busbar assembly, having the busbar and the busbar frame, is in the second section of the frame.

Referring to Figure 3, in an embodiment there is a gap between the first busbar assembly 104A and the middle wall 114 in the first section 116A, and between the second busbar assembly 104B and the middle wall 114 in the second section of the frame 116B. As described above, the middle wall is plate-like structure in the middle of the cells that holds the cells and substantially prevents a lateral movement of the cells in the module. The busbar and the busbar frame are also plate-like parts and there is the gap (space) between the busbar assemblies and the middle wall. As described, the middle wall may cover the battery cells only from the middle when arranged into the holes, and then a major part of the cells is not covered. Then the heat transfer substance can easily be in contact with the cells in the first and the second sections. The heat transfer substance is flowed in the gap in the first and the second sections such that the substance is efficiently in contact with the cells. The gap enables access of the heat transfer substance to battery cells.

In an embodiment, there is a gap between the adjacent battery cells 102 arranged between the first and the second busbar assemblies 104A - B. The gap between the adjacent cells enables access of the heat transfer substance to all battery cells and also enables better flow of the substance.

In an embodiment, at least part of the fastening members of the middle wall comprises at least one guiding wall configured to guide a flow of the heat transfer substance inside the battery module. This is not illustrated in Figures. As described, the fastening member may be the screw boss, and one or more adjacent screw bosses may be coupled together with the guiding wall. Referring now to Figure 2C, there may be three groups of the holes G1 - G3 for the cells dividing the cells into the three groups, for example. The screw bosses that are between the groups may comprise the guiding wall separating, at least partly, the groups from each other from the heat transfer substance flowing point of view. For example, the screw bosses between the group G1 and G2 may comprise the guiding wall, and also the screw bosses between the group G2 and G3.

Referring to Figure 1B, in an embodiment, a first edge of the side walls of the frame comprises a first locking element 130A and a second edge of the side walls of the frame comprises a second locking element 130B, wherein the second locking element 130B is configured to receive the first locking element 130A. The first locking element may be a protrusion and the second locking element may be a groove configured to receive the protrusion. The locking elements lock the modules together when two or more modules are stacked one on the other.

In an embodiment, the first and/or second locking element comprises a sealing element, like a gasket, for sealing the interface between the two or more modules stacked one on the other. The sealing may be configured to keep the heat transfer substance inside the module(s), for example.

In an embodiment, the middle wall is substantially in the middle of the housing (side walls) in the vertical direction. Referring to Figure 2B, which is the cross section of the main frame, the middle wall 114 is substantially in the middle of the main frame in the vertical direction. Then a size (volume) of the first and second section of the frame are substantially the same.

In an embodiment, the side walls 112A - D comprise one or more fastening members 132 for coupling a plurality of the battery modules 100 together. The fastening members are illustrated in Figure 2A, for example. The fastening member may a hole on the side walls enabling a use of separate fastening means for fastening the modules together. The fastening means may comprise a bolt and/or a threaded bar and/or a nut, for example. In another embodiment, the side walls may comprise a flange in vicinity of the first and the second edge of the side walls. The flange of the first edge of the first module is configured to be placed against the flange of the second edge of the second module. The flange may comprise one or more holes used for coupling the modules together from the flanges by a screw, for example. The holes may be aligned when the flanges are set against to each other. The flange may extend perpendicularly away from the side wall outside of the frame.

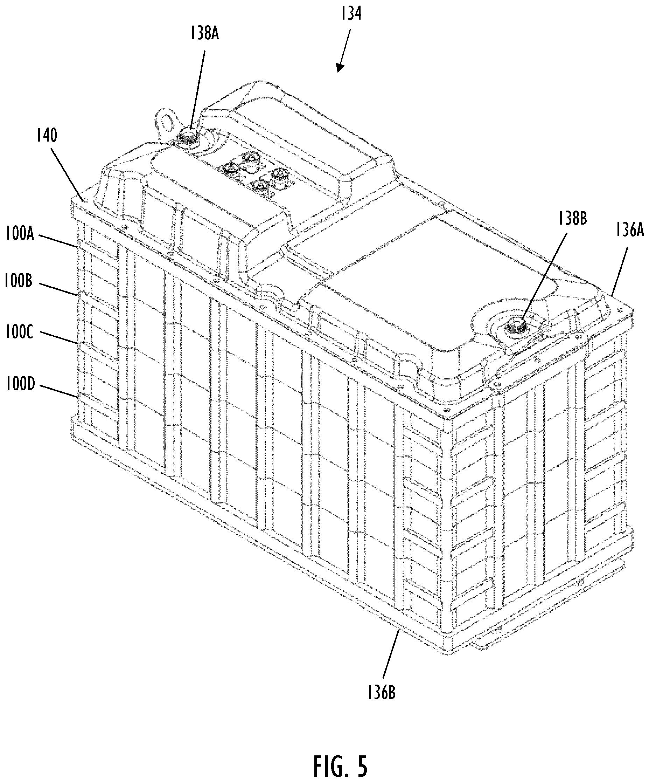

Referring to Figure 5, according to another aspect, there is provided a battery pack 134 comprising a plurality of the battery modules 100. The battery modules may have all the features described in this application. The Figure 5 illustrates the battery pack 134 comprising four battery modules 100A - D. This is just one example, and the number of the modules in the battery pack may vary according to the needs.

Still referring to Figure 5, in an embodiment, a plurality of the battery modules 100A - D is stacked one on the other wherein a top 100A and a bottom module 100D comprises a cover 136A - B. In an embodiment, the same cover is used in the top and the bottom modules. In another embodiment, there is a separate top cover 136A and a separate bottom cover 136B. The covers may further comprise the same locking features as the frame with or without the sealing member. The covers may further comprise one or more holes 140 for the fastening means configured to fasten a plurality of the battery modules and the covers together to form the desired battery pack. As wrote, the fastening members may comprise the screw and/or threaded bar with nut, for example. The holes may comprise threads.

In an embodiment, the cover 136A - B comprises an inlet connector 138A and an outlet connector 138B for leading the heat transfer substance into and/or out of the first and the second conduit 122A - B of the frame 110 of the battery module 100. In Figure 5, the inlet and the outlet connectors are in the top cover 136A, but the connectors may also be in the bottom cover 136B. The heat transfer system may be coupled with the inlet and outlet connectors.

The battery module according to the invention provides the structure that alleviates many issues of the known solutions. The main frame of the module comprises the integrated middle wall that removes needs for separate support elements for the battery cells, hence the battery module assembly has less parts and its structure is simpler. In addition, the structure enables the efficient way to transfer heat from/to the battery cells.

It will be obvious to a person skilled in the art that, as technology advances, the inventive concept can be implemented in various ways. The invention and its embodiments are not limited to the example embodiments described above but may vary within the scope of the claims.

## Claims

1. A battery module (100) comprising:
a plurality of battery cells (102) having two opposite ends;
a first busbar assembly (104A) comprising at least a first busbar (106A) coupled with a first busbar frame (108A), and a second busbar assembly (104B) comprising at least a second busbar (106B) coupled with a second busbar frame (108B) configured to electrically couple the battery cells (102); and
a main frame (110) having side walls (112A - D) forming a housing and a middle wall (114) inside the housing dividing an inner space of the housing in a vertical direction to a first and a second section (116A - B), wherein the middle wall (114) comprises a plurality of holes (118) for receiving the battery cells (102) such that one end of each battery cell (102) is in the first section (116A) and another end is in the second section (116B), and wherein the middle wall (114) is substantially in the middle of the battery cells (102) in the vertical direction supporting the battery cells (102) substantially from the middle, and
wherein the middle wall (114) further comprises a plurality fastening members (120) for fastening the first busbar assembly (104A) to the main frame (110) in the first section (116A) and the second busbar assembly (104B) to the main frame (110) in the second section (116B) such that the battery cells (102) are arranged between the first and the second busbar assemblies (104A - B) which couple the battery cells (102) to the battery module (102).

2. The battery module (100) of claim 1, wherein the main frame (110) comprises a first conduit (122A) in vicinity of a first end of the frame (110) for leading a heat transfer substance into the battery module (100), and a second conduit (122B) in vicinity of a second end of the frame (110) for leading the heat transfer substance out of the battery module (100).

3. The battery module (100) of claim 2, wherein the first conduit (122A) comprises one or more inlets (124A) for leading the heat transfer substance into the first and/or the second section of the frame (116A - B), and the second conduit (122B) comprises one or more outlets (126B) for leading the heat transfer substance out of the first and/or second section of the frame (116A - B).

4. The battery module (100) of claims 2-3, wherein the first and/or the second busbar frame (108A -B) comprises at least one groove (128) in vicinity of the ends of the battery cells (102) configured to enable access of the heat transfer substance to the ends of the battery cells (102).

5. The battery module (100) of claim 4, wherein the groove (128) forms a channel network in the busbar frame (108A - B) to enable access of the heat transfer substance to a plurality of the ends of the battery cells (102).

6. The battery module (100) of any preceding claim, wherein the first busbar frame (108A) is arranged between the first busbar (104A) and the battery cells (102), and the second busbar frame (108B) is arranged between the second busbar (104B) and the battery cells (102).

7. The battery module (100) of any preceding claim, wherein there is a gap between the first busbar assembly (104A) and the middle wall (114) in the first section (116A), and between the second busbar assembly (104B) and the middle wall (114) in the second section of the frame (116B).

8. The battery module (100) of any preceding claim, wherein there is a gap between the adjacent battery cells (102) arranged between the first and the second busbar assemblies (104A - B).

9. The battery module (100) of any preceding claim, wherein a first edge of the side walls of the main frame (110) comprises a first locking element (130A) and a second edge of the side walls of the main frame (110) comprises a second locking element (130B), wherein the second locking element (130B) is configured to receive the first locking element (130A).

10. The battery module (100) of any preceding claim, wherein the middle wall (114) is substantially in the middle of the housing in a vertical direction.

11. The battery module (100) of any preceding claim, wherein the side walls (112A - D) comprise one or more fastening members (132) for coupling a plurality of the battery modules (100) together.

12. A battery pack (134) comprising a plurality of a battery modules (100) of claims 1 - 11.

13. The battery pack (134) of claim 12, wherein a plurality of the battery modules (100A - D) is stacked one on the other wherein a top and a bottom module (100A, 100D) comprises a cover (136A - B).

14. The battery pack (134) of claim 12, wherein the cover of the top or the bottom module (136A - B) comprises an inlet connector (138A) and an outlet connector (138B) for leading a heat transfer substance into and/or out of a first and/or a second conduit of a main frame (122A - B) of the battery module (100).

## Patentansprüche

1. Batteriemodul (100), das Folgendes umfasst:
eine Vielzahl von Batteriezellen (102) mit zwei gegenüberliegenden Enden;
eine erste Sammelschienenanordnung (104A), die mindestens eine erste Sammelschiene (106A), die an einen ersten Sammelschienenrahmen (108A) gekoppelt ist, sowie eine zweite Sammelschienenanordnung (104B) umfasst, die mindestens eine zweite Sammelschiene (106B) umfasst, die an einen zweiten Sammelschienenrahmen (108B) gekoppelt und dazu ausgelegt ist, die Batteriezellen (102) elektrisch zu koppeln; und
einen Hauptrahmen (110) mit Seitenwänden (112A-D), die ein Gehäuse bilden, und einer Mittelwand (114) im Gehäuse, die in einer vertikalen Richtung einen Innenraum des Gehäuses in einen ersten und einen zweiten Abschnitt (116A-B) teilt, wobei die Mittelwand (114) eine Vielzahl von Löchern (118) zum Aufnehmen der Batteriezellen (102) umfasst, derart, dass sich ein Ende von jeder Batteriezelle (102) im ersten Bereich (116A) befindet und sich ein anderes Ende im zweiten Abschnitt (116B) befindet, und wobei die Mittelwand (114) im Wesentlichen in der Mitte der Batteriezellen (102) in der vertikalen Richtung befindet und die Batteriezellen (102) im Wesentlichen von der Mitte stützt, und
wobei die Mittelwand (114) ferner zum Befestigen der ersten Sammelschienenanordnung (104A) am Hauptrahmen (110) im ersten Abschnitt (116A) und der zweiten Sammelschienenanordnung (104B) am Hauptrahmen (110) im zweiten Abschnitt (116B) eine Vielzahl von Befestigungselementen (120) umfasst, derart, dass die Batteriezellen (102) zwischen der ersten und der zweiten Sammelschienenanordnung (104A-B) angeordnet sind, die die Batteriezellen (102) an das Batteriemodul (102) koppeln.

2. Batteriemodul (100) nach Anspruch 1, wobei der Hauptrahmen (110) in der Nähe eines ersten Endes des Rahmens (110) einen ersten Kanal (122A) zum Leiten einer Wärmeübertragungssubstanz in das Batteriemodul (100) und in der Nähe eines zweiten Endes des Rahmens (110) einen zweiten Kanal (122B) zum Leiten der Wärmeübertragungssubstanz aus dem Batteriemodul (100) heraus umfasst.

3. Batteriemodul (100) nach Anspruch 2, wobei der erste Kanal (122A) zum Führen der Wärmeübertragungssubstanz in den ersten und/oder den zweiten Abschnitt des Rahmens (116A-B) einen oder mehrere Einlässe (124A) umfasst, und der zweite Kanal (122B) zum Führen der Wärmeübertragungssubstanz aus dem ersten und/oder dem zweiten Abschnitt des Rahmens (116A-B) ein oder mehrere Auslässe (126B) heraus umfasst.

4. Batteriemodul (100) nach den Ansprüchen 2 bis 3, wobei der erste und/oder der zweite Sammelschienenrahmen (108A-B) in der Nähe der Enden der Batteriezellen (102) mindestens eine Nut (128) umfasst, die dazu ausgelegt ist, einen Zugang der Wärmeübertragungssubstanz zu den Enden der Batteriezellen (102) zu ermöglichen.

5. Batteriemodul (100) nach Anspruch 4, wobei die Nut (128) ein Kanalnetzwerk im Sammelschienenrahmen (108A-B) bildet, um einen Zugang der Wärmeübertragungssubstanz zu einer Vielzahl der Enden der Batteriezellen (102) zu ermöglichen.

6. Batteriemodul (100) nach einem der vorhergehenden Ansprüche, wobei der erste Sammelschienenrahmen (108A) zwischen der ersten Sammelschiene (104A) und den Batteriezellen (102) angeordnet ist, und der zweite Sammelschienenrahmen (108B) zwischen der zweiten Sammelschiene (104B) und den Batteriezellen (102) angeordnet ist.

7. Batteriemodul (100) nach einem der vorhergehenden Ansprüche, wobei sich im ersten Abschnitt (116A) zwischen der ersten Sammelschienenanordnung (104A) und der Mittelwand (114) und im zweiten Abschnitt des Rahmens (116B) zwischen der zweiten Sammelschienenanordnung (104B) und der Mittelwand (114) ein Spalt befindet.

8. Batteriemodul (100) nach einem der vorhergehenden Ansprüche, wobei sich zwischen den benachbarten Batteriezellen (102), die zwischen der ersten und der zweiten Sammelschienenanordnung (104A-B) angeordnet sind, ein Spalt befindet.

9. Batteriemodul (100) nach einem der vorhergehenden Ansprüche, wobei eine erste Kante der Seitenwände des Hauptrahmens (110) ein erstes Verriegelungselement (130A) umfasst und eine zweite Kante der Seitenwände des Hauptrahmens (110) ein zweites Verriegelungselement (130B) umfasst, wobei das zweite Verriegelungselement (130B) dazu ausgelegt ist, das erste Verriegelungselement (130A) aufzunehmen.

10. Batteriemodul (100) nach einem der vorhergehenden Ansprüche, wobei sich die Mittelwand (114) im Wesentlichen in einer vertikalen Richtung in der Mitte des Gehäuses befindet.

11. Batteriemodul (100) nach einem der vorhergehenden Ansprüche, wobei die Seitenwände (112A-B) ein oder mehrere Befestigungselemente (132) zum Zusammenkoppeln einer Vielzahl der Batteriemodule (100) umfassen.

12. Batteriepack (134), das eine Vielzahl von Batteriemodulen (100) nach den Ansprüchen 1 bis 11 umfasst.

13. Batteriepack (134) nach Anspruch 12, wobei eine Vielzahl der Batteriemodule (100A-D) übereinander gestapelt sind, wobei ein oberes und ein unteres Modul (100A, 100D) eine Abdeckung (136A-B) umfasst.

14. Batteriepack (134) nach Anspruch 12, wobei die Abdeckung des oberen oder des unteren Moduls (136A-B) zum Führen der Wärmeübertragungssubstanz in einen ersten und/oder einen zweiten Kanal des Hauptrahmens (122A-B) des Batteriemoduls (100) bzw. aus demselben heraus einen Einlassverbinder (138A) und einen Auslassverbinder (138B) umfasst.

## Revendications

1. Module de batterie (100) comprenant :
une pluralité d'éléments de batterie (102) ayant deux extrémités opposées ;
un premier ensemble de barre omnibus (104A) comprenant au moins une première barre omnibus (106A) couplée avec un premier bâti de barre omnibus (108A) et un second ensemble de barre omnibus (104B) comprenant au moins une seconde barre omnibus (106B) couplée à un second bâti de barre omnibus (108B) configuré pour coupler électriquement les éléments de batterie (102) ; et
un bâti principal (110) ayant des parois latérales (112AD) formant un boîtier et une paroi médiane (114) à l'intérieur du boîtier divisant un espace interne du boîtier dans une direction verticale en une première et en une seconde section (116A-B), dans lequel la paroi médiane (114) comprend une pluralité de trous (118) pour recevoir les éléments de batterie (102) de sorte qu'une extrémité de chaque élément de batterie (102) est dans la première section (116A) et qu'une autre extrémité est dans la seconde section (116B), et dans lequel la paroi médiane (114) est sensiblement au milieu des éléments de batterie (102) dans la direction verticale supportant les éléments de batterie (102) sensiblement à partir du milieu, et
dans lequel la paroi médiane (114) comprend en outre une pluralité d'éléments de fixation (120) pour fixer le premier ensemble de barre omnibus (104A) au bâti principal (110) dans la première section (116A) et le second ensemble de barre omnibus (104B) au bâti principal (110) dans la seconde section (116B) de sorte que les éléments de batterie (102) sont agencés entre le premier et le second ensemble de barre omnibus (104A-B) qui couplent les éléments de batterie (102) au module de batterie (102) .

2. Module de batterie (100) selon la revendication 1, dans lequel le bâti principal (110) comprend un premier conduit (122A) à proximité d'une première extrémité du bâti (110) pour conduire une substance de transfert de chaleur dans le module de batterie (100), et un second conduit (122B) à proximité d'une seconde extrémité du bâti (110) pour conduire la substance de transfert de chaleur hors du module de batterie (100).

3. Module de batterie (100) selon la revendication 2, dans lequel le premier conduit (122A) comprend une ou plusieurs entrées (124A) pour conduire la substance de transfert de chaleur dans la première et/ou la seconde section du bâti (116A-B), et le second conduit (122B) comprend une ou plusieurs sorties (126B) pour conduire la substance de transfert de chaleur hors de la première et/ou de la seconde section de bâti (116A-B).

4. Module de batterie (100) selon les revendications 2 à 3, dans lequel le premier et/ou le second bâti de barre omnibus (108A-B) comprend au moins une rainure (128) à proximité des extrémités des éléments de batterie (102) configurés pour permettre l'accès de la substance de transfert de chaleur aux extrémités des éléments de batterie (102).

5. Module de batterie (100) selon la revendication 4, dans lequel la rainure (128) forme un réseau de canaux dans le bâti de barre omnibus (108A-B) pour permettre l'accès de la substance de transfert de chaleur à une pluralité d'extrémités des éléments de batterie (102).

6. Module de batterie (100) selon l'une quelconque des revendications précédentes, dans lequel le premier bâti de barre omnibus (108A) est agencé entre la première barre omnibus (104A) et les éléments de batterie (102) et le second bâti de barre omnibus (108B) est agencé entre la seconde barre omnibus (104B) et les éléments de batterie (102).

7. Module de batterie (100) selon l'une quelconque des revendications précédentes, dans lequel il y a un interstice entre le premier ensemble de barre omnibus (104A) et la paroi médiane (114) dans la première section (116A), et entre le second ensemble de barre omnibus (104B) et la paroi médiane (114) dans la seconde section du bâti (116B).

8. Module de batterie (100) selon l'une quelconque des revendications précédentes, dans lequel il y a un interstice entre les éléments de batterie (102) adjacents agencés entre le premier et le second ensemble de barre omnibus (104A-B).

9. Module de batterie (100) selon l'une quelconque des revendications précédentes, dans lequel un premier bord des parois latérales du bâti principal (110) comprend un premier élément de verrouillage (130A) et un second bord des parois latérales du bâti principal (110) comprend un second élément de verrouillage (130B), dans lequel le second élément de verrouillage (130B) est configuré pour recevoir le premier élément de verrouillage (130A).

10. Module de batterie (100) selon l'une quelconque des revendications précédentes, dans lequel la paroi médiane (114) est sensiblement au milieu du boîtier dans une direction verticale.

11. Module de batterie (100) selon l'une quelconque des revendications précédentes, dans lequel les parois latérales (112A-D) comprennent un ou plusieurs éléments de fixation (132) pour coupler une pluralité de modules de batterie (100) ensemble.

12. Bloc-batterie (134) comprenant une pluralité de modules de batterie (100) selon les revendications 1 à 11.

13. Bloc-batterie (134) selon la revendication 12, dans lequel une pluralité de modules de batterie (100A-D) sont empilés les uns sur les autres, dans lequel un module supérieur et un module inférieur (100A, 100D) comprennent un couvercle (136A-B).

14. Bloc-batterie (134) selon la revendication 12, dans lequel le couvercle du module supérieur ou du module inférieur (136A-B) comprend un connecteur d'entrée (138A) et un connecteur de sortie (138B) pour conduire une substance de transfert de chaleur dans et/ou hors d'un premier et/ou d'un second conduit d'un boîtier principal (122A-B) du module de batterie (100).
